# DEMANDE DE BREVET EUROPEEN

(11) **EP 0 581 658 A1**
(43) Date de publication de la demande: **02.02.1994**
(21) Numéro de dépôt: 93401922.5
(22) Date de dépôt: 23.07.1993
(51) Int. Cl.: B60S 9/06, B60P 3/32

(54) **Mécanisme de jambe d'appui relevable, châssis de remorque et remorque équipés d'un tel mécanisme**

(30) Priorité: 30.07.1992 FR 9209447
(71) Demandeur: ROUSSEAU TECHNOLOGIE, F-45300 Boynes (FR)
(72) Inventeur: Rauser, Lucien, F-92360 Meudon la Foret (FR)
(74) Mandataire: Martin, Jean-Jacques

(57) **Abrégé**

Le mécanisme est conçu pour déplacer une jambe d'appui (8) entre une position active où elle porte par une extrémité sur une surface d'appui (10) et une position inactive où elle est repliée à l'écart d'une telle surface d'appui. Il comprend a) au moins une première bielle (4) montée entre un premier axe d'articulation fixe (2) et un premier axe d'articulation mobile (6) solidaire de la jambe d'appui (8) entre les extrémités de celle-ci, b) au moins une deuxième bielle (5) montée entre un deuxième axe d'articulation fixe (3) distant du premier et un deuxième axe d'articulation mobile (7) solidaire de l'autre extrémité de la jambe d'appui, et c) des moyens de manoeuvre (11) pour rapprocher ou écarter le deuxième axe d'articulation mobile (7) du premier axe d'articulation fixe (2) de manière à entraîner la jambe d'appui (8) dans ses positions active et inactive, respectivement.

## Description

La présente invention est relative à un mécanisme de jambe d'appui relevable et, plus particulièrement, un tel mécanisme conçu pour déplacer une jambe d'appui entre une position active où elle porte par une extrémité sur une surface d'appui et une position inactive où elle est repliée à l'écart d'une telle surface d'appui. L'invention concerne encore un châssis de remorque et une remorque équipés d'un tel mécanisme.

On connaît des véhicules remorquables à un seul essieu, tel que les "caravanes", qui sont munis d'une ou plusieurs jambes d'appui du type défini ci-dessus. Lorsqu'un tel véhicule est à l'arrêt et dételé d'un autre véhicule nécessaire à sa traction, il convient de le stabiliser à l'aide d'au moins une jambe d'appui ou béquille, contre un basculement autour de l'axe de l'essieu. Pour ce faire, on peut équiper le châssis supportant le véhicule de jambes d'appui relevables, mobiles entre une position active où elles reposent sur le sol pour maintenir le véhicule sensiblement à l'horizontale et une position inactive dans laquelle on la relève lorsque le véhicule doit être remorqué vers un autre lieu.

On décrit au brevet français n° 2 437 969 un châssis pour remorque équipé de telles jambes d'appui. Chacune de celles-ci est déplacée de sa position inactive à sa position active, ou inversement, à l'aide d'un mécanisme à bielle et vis horizontale que l'on fait tourner dans un sens ou dans l'autre à l'aide d'une manivelle de manoeuvre. La jambe d'appui bascule ainsi dans un plan vertical, par exemple depuis sa position relevée jusqu'au contact du sol pour stabiliser le véhicule. Dans ce déplacement, l'extrémité libre de la jambe décrit un arc de cercle avant de venir buter sur le sol alors que la jambe est encore inclinée sur celui-ci. Si l'on tourne encore la manivelle pour caler la jambe d'appui, il faut exercer sur cette manivelle un couple très élevé du fait que la transmission du poids du véhicule au sol se fait alors par la jambe avec une composante horizontale très importante contre laquelle il faut lutter par ce couple appliqué à la manivelle de manoeuvre de la vis horizontale.

En outre ce calage exige un glissement de l'extrémité de la jambe d'appui sur le sol. Du fait de l'inclinaison de la tangente à la trajectoire de l'extrémité de la jambe au niveau du sol, la longueur du glissement nécessaire est assez importante, ce glissement avec frottement exigeant de la part de la personne qui actionne la manivelle un effort supplémentaire pour vaincre ce frottement.

Pour toutes ces raisons, la mise en place en position de stabilisation d'une jambe d'appui du type décrit ci-dessus est une opération qui exige des efforts physiques importants de la part de la personne qui réalise cette opération.

La présente invention a donc pour but de réaliser un mécanisme de jambe d'appui relevable pour véhicule remorquable ou automoteur, conçu de manière à diminuer les efforts nécessaires à cette mise en place, par rapport aux efforts exigés par les mécanismes de ce type connus de la technique antérieure.

La présente invention a aussi pour but de réaliser un tel mécanisme qui présente en outre un faible encombrement et une bonne maniabilité.

On atteint ces buts de l'invention, ainsi que d'autres qui apparaîtront à la lecture de la description qui va suivre, avec un mécanisme de jambe d'appui relevable, en particulier pour un châssis de remorque ou un véhicule automoteur, conçu pour déplacer une jambe d'appui entre une position active où elle porte par une extrémité sur une surface d'appui et une position inactive où elle est repliée à l'écart d'une telle surface d'appui. Suivant l'invention le mécanisme comprend a) au moins une première bielle montée entre un premier axe d'articulation fixe et un premier d'articulation mobile solidaire de la jambe d'appui entre les extrémités de celle-ci, b) au moins une deuxième bielle montée entre un deuxième axe d'articulation fixe distant du premier et un deuxième axe d'articulation mobile solidaire de l'autre extrémité de la jambe d'appui et c) des moyens de manoeuvre pour rapprocher ou écarter le deuxième axe d'articulation mobile du premier axe d'articulation fixe, de manière à entraîner la jambe d'appui dans ses positions active et inactive, respectivement.

Comme on l'expliquera dans la suite, la présence de la deuxième bielle permet de bénéficier d'un effet de "genouillère" réduisant considérablement les efforts à exercer sur les moyens de manoeuvre pour amener la jambe d'appui dans sa position active ou pour en écarter.

Suivant une caractéristique avantageuse du mécanisme selon la présente invention, dans la position active de la jambe d'appui au contact de la surface d'appui, l'angle séparant le premier axe d'articulation mobile du deuxième axe d'articulation fixe, vue du deuxième axe d'articulation mobile, est supérieur à 90° et, de préférence, voisin de 180°, pour bénéficier pleinement de l'effet de genouillère mentionné ci-dessus.

Les axes d'articulation fixes des première et deuxième bielles sont solidaires d'une platine, les moyens de manoeuvre étant constitués par un arbre fileté articulé sur la platine au voisinage du premier axe d'articulation fixe, cet arbre passant dans un tourillon fileté complémentairement et solidaire du deuxième axe d'articulation mobile.

D'autres caractéristiques et avantages de la présente invention apparaîtront à la lecture de la description qui va suivre et à l'examen du dessin annexé dans lequel :
- les figures 1 et 2 sont des vues en élévation du mécanisme suivant l'invention, dans sa position active et dans sa position inactive respectivement, et
- la figure 3 est une demi-vue en plan correspondant à celle de la figure 2.

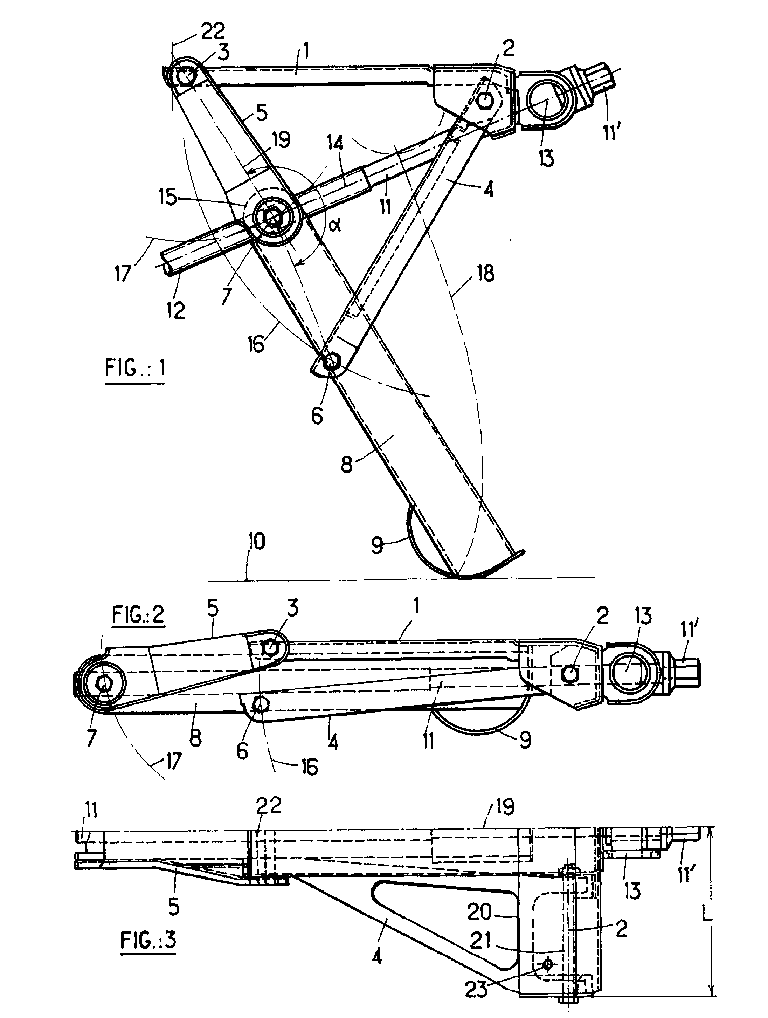

On se réfère à la figure 1 du dessin annexé où le mécanisme suivant l'invention est représenté dans sa position active, c'est-à-dire dans la position où il assure la stabilisation, en position sensiblement horizontale, d'un véhicule tel qu'une remorque ou d'un véhicule automoteur. Il comprend une platine 1 portant des premier (2) et deuxième (3) axes d'articulation fixes, de première (4) et deuxième (5) bielles, respectivement. Les bielles 4 et 5 sont articulées, à leur autre extrémité, sur des premier et deuxième axes d'articulation mobiles 6,7 respectivement, portés par une jambe d'appui 8. L'axe 7 est placé à une extrémité de la jambe d'appui 8, opposée à celle qui est destinée à reposer sur le sol 10, alors que l'axe 6 est intermédiaire entre les deux extrémités de la jambe d'appui. On remarquera que l'extrémité de lajambe qui repose sur le sol est garnie d'une tôle arrondie 9 pour améliorer son assise.

Le mécanisme représenté à la figure 1 est conçu pour pouvoir être monté sur un élément de châssis de remorque tel qu'un longeron (non représenté) par des moyens de fixation tels qu'un boulon traversant la platine 1 suivant l'axe 22.

Un arbre 11, fileté en 12 sur une partie de sa longueur, est articulé sur la platine 1 autour d'un axe 13 perpendiculaire au plan de la figure. L'extrémité 11' de l'arbre 11 adjacente à cet axe d'articulation 13 est conformée en écrou permettant l'engagement d'une manivelle de mise en rotation de l'arbre. La partie filetée 12 de l'arbre 11 traverse un alésage fileté complémentairement dans un tourillon 1 définissant l'axe d'articulation 7 de la bielle 5 sur la jambe 8.

On comprend que les axes 2,3,6,7 définissent les sommets d'un quadrilatère déformable par une rotation de l'arbre fileté 11. En faisant tourner l'arbre dans le sens qui permet de repousser le tourillon 1 vers la gauche (du point de vue de la figure 1) on peut ramener le mécanisme de la position active d'extension représentée à la figure 1, à la position inactive représentée à la figure 2 dans laquelle les bielles 4 et 5, la jambe 8 et l'arbre 11 sont rassemblés les uns contre les autres dans un volume d'encombrement particulièrement faible. On remarquera à cet égard que la position décentrée de l'axe 6 par rapport à l'axe longitudinal de la jambe d'appui permet d'augmenter la garde au sol de celle-ci, en position inactive repliée. La position décentrée de l'axe 6 résulte aussi de la nécessité de faire passer l'axe de l'arbre 11 entre les axes 3 et 6, y compris dans la position inactive de la jambe 8, comme cela apparait sur la Fig. 2

Au cours de la manoeuvre qui fait passer la jambe 8 de sa position active à sa position inactive, les axes 6 et 7 tournent sur des arcs de cercle 16 et 17, respectivement, dans le sens des aiguilles d'une montre.

En faisant tourner l'arbre 11 dans le sens opposé au sens de rotation défini ci-dessus, à partir de la position du mécanisme représenté à la figure 2, on déplie le mécanisme pour faire passer la jambe d'appui de sa position inactive à sa position active de la figure 1. Le tourillon 1 est alors tiré vers la droite (du point de vue de la figure 1) ce qui fait tourner les bielles 4 et 5 dans le sens contraire de celui des aiguilles d'une montre, jusqu'aux positions représentées à la figure 1, alors que l'extrémité 9 de la jambe d'appui descend vers le sol en suivant une trajectoire 18 sensiblement verticale, repérée en trait interrompu à la figure 1.

Après que l'extrémité 9 de la jambe 8 ait touchée le sol 10, la suite de la rotation de l'arbre 11 provoque une transmission croissante du poids supporté par la jambe, par les bielles 4 et 5 et cette jambe 8, vers le sol. Ce poids est celui d'une partie d'une caisse de remorque, d'une caravane ou d'un véhicule automoteur, par exemple, monté sur un châssis équipé de la jambe suivant l'invention.

Suivant une caractéristique importante de la présente invention, dans la position représentée à la figure 1, l'angle (a) séparant le premier axe d'articulation mobile 6 du deuxième axe d'articulation fixe 3, vu de l'axe 7, est supérieur à 90° et de préférence, comme représenté, voisin de 180°, l'axe de l'arbre 11 étant voisin de la bissectrice de cet angle.

On comprend que dans ces conditions, les efforts transmis par la bielle 5 entre les axes 3 et 7 et par la jambe 8 entre les axes 7 et 6 présentent des composantes sur l'axe 14 de l'arbre 11 qui sont de faible module et qui ne s'opposent que faiblement au couple que doit développer sur l'arbre 11 la personne qui manoeuvre la jambe d'appui pour caler celle-ci contre le sol.

Il apparaît ainsi que l'agencement particulierde la bielle 5 et de la jambe 8 par rapport à l'arbre 11 lors de ce calage, permet au mécanisme suivant l'invention de bénéficier de la démultiplication des efforts due à l'effet de "genouillère" mentionné plus haut.

On remarquera en outre que la trajectoire 18 suivie par l'extrémité 9 de la jambe d'appui dans sa descente vers le sol suit, notamment au voisinage du sol, un profil peu incliné sur la verticale (de l'ordre de 30° au point d'appui, environ). Cet angle est notablement inférieur à celui que l'on observe sur une jambe d'appui classique arrivant sur le sol par une trajectoire circulaire centrée sur l'autre extrémité d'une jambe présentant alors une longueur correspondant à la somme de celles de la bielle et de la jambe 8. Le calage de la jambe 8, qui exige un certain glissement de son extrémité 9 sur le sol 10, pourra alors être obtenu par un glissement d'amplitude sensiblement plus courte que celle d'une jambe d'appui classique. Cette amplitude est en effet réduite des deux tiers environ. Ce glissement s'accompagnant d'un fort frottement de l'extrémité 9 de la jambe d'appui sur le sol, on comprend que l'on réduit encore par là l'énergie à dépenser pour obtenir le calage de la jambe d'appui, en même temps que l'on réduit les efforts de flexion subis par la jambe d'appui autour de l'axe 6 de son ancrage sur la première bielle 4 qui joue le rôle de jambe de force.

De l'examen de la demi-vue en plan de la figure 3, il ressort tout d'abord que le mécanisme suivant l'invention comprend de préférence deux bielles 4 et deux bielles 5, symétriques, donnant avantageusement au mécanisme suivant l'invention une complète symétrie par rapport à son plan médian de trace 19 sur cette figure. Chacune des deux premières bielles 4 prend une forme généralement triangulaire et s'articule sur la platine sur toute la longueur d'un côté du triangle, perpendiculairement au plan médian du mécanisme. La platine suivant invention est ainsi conformée pour constituer un palier 20 de longueur 2L (voir figure 3) pour les bielles 4. Deux axes 21 sont fixés symétriquement dans ce palier 20 pour supporter les bielles 4 en rotation autour de l'axe géométrique 2.

La platine 1 peut être réalisée en tôle découpée et pliée de manière à présenter à une extrémité le palier 20 des bielles 4 et celui de l'articulation de l'arbre 11 autour de l'axe 13.

La platine ainsi obtenue est très rigide et constitue un moyen de support de la jambe d'appui qui peut être fixé à un élément de châssis tel qu'une extrémité de longeron par exemple. Grâce à la longueur du palier 20, transversalement au plan médian du mécanisme, il est en outre possible de fixer cette platine à la caisse de la remorque ou de la caravane portée par le châssis, par des boulons traversant ce palier suivant deux axes symétriques tels que l'axe 23 ce qui permet de supprimer les brides prévues à cet effet dans le châssis décrit au brevet précité.

On remarquera encore que, lorsqu'on actionne le mécanisme suivant l'invention pourfaire descendre la jambe d'appui vers le sol en position active de support, l'arbre 11 passe progressivement d'une position sensiblement horizontale (voirfigure 2) à une position inclinée qui relève la manivelle engagée sur l'écrou 11', ce qui rend la manoeuvre encore plus confortable en permettant à la personne qui actionne cette manivelle de se relever aussi.

Il apparaît maintenant que la présente invention permet d'atteindre les buts fixés, à savoir la réalisation d'un mécanisme de jambe d'appui d'encombrement réduit et de manoeuvre peu pénible et commode.

Bien entendu la présente invention n'est pas limitée au mode de réalisation décrit et représenté qui n'a été donné qu'à titre d'exemple. L'invention n'est pas limitée non plus aux applications mentionnées ci-dessus à des châssis de remorque ou de caravane. Elle pourrait aussi bien trouver application dans tout corps, meuble, machine, véhicule, etc.... exigeant une stabilisation par jambe d'appui.

## Revendications

1. Mécanisme de jambe d'appui relevable, en particulier pour châssis de remorque, conçu pour déplacer une jambe d'appui (8) entre une position active où elle porte par une extrémité (9) sur une surface d'appui (10) et une position inactive ou elle est repliée à l'écart d'une telle surface d'appui, comprenant a) au moins une première bielle (4) montée entre un premier axe d'articulation fixe (2) et un premier axe d'articulation mobile (6) solidaire de la jambe d'appui (8), b) au moins une deuxième bielle (5) montée entre un deuxième axe d'articulation fixe (3) distant du premier et un deuxième axe d'articulation mobile (7) solidaire de l'autre extrémité de la jambe d'appui, et c) des moyens de manoeuvre (11) pour rapprocher ou écarter le deuxième axe d'articulation mobile (7) du premier axe d'articulation fixe (2) de manière à entraîner la jambe d'appui dans ses positions active et inactive, respectivement, caractérisé en ce que l'axe d'articulation (6) de la première bielle (4) sur la jambe d'appui est disposé entre les deux extrémités de celle-ci de manière à limiter le déplacement de l'extrémité (9) de la jambe d'appui parallèlement à la surface d'appui, à l'arrivée de cette extrémité sur cette surface.

2. Mécanisme conforme à la revendication 1, caractérisé en ce que dans la position active de la jambe d'appui (8) au contact de la surface d'appui, l'angle (a) séparant le premier axe d'articulation mobile (6) du deuxième axe d'articulation fixe (3), vu du deuxième axe d'articulation mobile (7), est supérieur à 90° et, de préférence, voisin de 180°.

3. Mécanisme conforme à l'une quelconque des revendications 1 et 2, caractérisé en ce que les axes d'articulation fixes des première et deuxième bielles sont solidaires d'une platine (1), les moyens de manoeuvre étant constitués par un arbre fileté (11) articulé sur la platine (1) au voisinage du premier axe d'articulation fixe (2), cet arbre passant dans un tourillon (1) fileté complémentairement et solidaire du deuxième axe d'articulation mobile (7).

4. Mécanisme conforme à la revendication 3, caractérisé en ce que la première bielle (4) présente une forme généralement triangulaire, le premier axe d'articulation fixe (2) s'étendant sur toute la longueurd'un côté de la bielle pour articuler celle-ci sur la platine (1).

5. Mécanisme conforme à l'une quelconque des revendications 1 à 4, caractérisé en ce qu'il présente un plan de symétrie médian et en ce qu'il comprend deux premières bielles et deux deuxièmes bielles montées symétriquement de part et d'autre du plan médian.

6. Mécanisme conforme à l'une quelconque des revendications 3 à 5, caractérisé en ce qu'il comprend des moyens de fixation de la platine (1) sur un élément de châssis de remorque, de manière que la jambe d'appui (8) soit mobile dans un plan sensiblement vertical.

7. Châssis de remorque, caractérisé en ce qu'au moins un mécanisme de jambe d'appui conforme à l'une quelconque des revendications 1 à 6 est monté sur un élément de ce châssis.

8. Remorque équipée d'un châssis conforme à la revendication 7.
